# EUROPEAN PATENT APPLICATION

(11) **EP 1 339 059 A2**
(43) Date of publication of application: **27.08.2003**
(21) Application number: 03004212.1
(22) Date of filing: 25.02.2003
(51) Int. Cl.: G11B 23/00, G11B 5/82, G11B 5/596

(54) **Method of producing master information carrier for magnetic transfer**

(30) Priority: 26.02.2002 JP 2002049413
(71) Applicant: FUJI PHOTO FILM CO., LTD., Kanagawa-ken, 250-01 (JP)
(72) Inventor: Komatsu, Kazunori, Odawara-shi, Kanagawa-ken (JP); Usa, Toshihiro, Odawara-shi, Kanagawa-ken (JP)
(74) Representative: HOFFMANN - EITLE

(57) **Abstract**

On an original of a master information carrier, a phase servo pattern is drawn by scanning the original with an electron beam (EB). The phase servo pattern (15) is drawn element (12a) by element by causing the electron beam having a beam diameter (d) not larger than the minimum width of the element to scan a disc-like substrate (11) of the original, which has been provided with a resist layer (12) for electron beam drawing, in a diametrical direction (Y) of the disc-like substrate while rotating the substrate in one direction (X) at a constant speed.

## Description

### BACKGROUND OF THE INVENTION

### Field of the Invention

This invention relates to a method of producing a master information carrier for magnetic transfer provided with an irregularity pattern (a pattern of protruding portions and recessed portions) representing information to be transferred to a magnetic recording medium, and more particularly to a method of producing an original for duplicating such master information carriers where the irregularity pattern is a phase servo pattern at an angle to the recording tracks and the phase servo pattern is drawn with an electron beam.

### Description of the Related Art

In magnetic recording media such as a hard disc, areas for recording servo information including, for instance, a servo signal for locating a recording track, an address signal representing the address of the recording track and a reproduction clock signal are provided at predetermined angular intervals. As a method of recording a servo signal on the magnetic recording medium, magnetic transfer has been wide used. In the magnetic transfer, the surface of a master information carrier having thereon an irregularity pattern (a pattern of protruding portions and recessed portions) of magnetic material representing information to be transferred is brought into close contact with a surface of a magnetic recording medium (a slave medium) having a magnetic layer and a transfer magnetic field is applied to the slave medium and the master information carrier in this state, thereby recording on the slave medium a magnetization pattern representing the information (e.g., a servo signal) on the master information carrier.

As a method of producing such a master information carrier, there has been wide known a method in which the master information carrier is produced on the basis of an original carrying thereon an irregularity pattern of resist (servo pattern) representing the information to be recorded on the slave medium. The irregularity pattern is formed by uniformly coating resist on a disc-like substrate of, for instance, glass, for instance, by spin coating, projecting onto the resist a laser beam or an electron beam modulated according to the information to be recorded on the slave medium, and developing the resist. Though use of a laser beam prevails over use of an electron beam at present, as the track width and the pattern width are narrowed to meet demand for a higher recording density, a laser beam will become too large in beam diameter. This problem may be overcome by drawing the irregularity pattern on the resist by an electron beam having a smaller beam diameter than a laser beam by turning on and off the electron beam while rotating the substrate and exposing each element of the pattern at one time or more times.

However, though being relatively easy to realize when the servo pattern is like a square perpendicular to the recording tracks (parallel to the circumferential direction), this approach is disadvantageous in that when the servo pattern is at an angle to the recording tracks as a phase servo pattern, an oblique side of an element is zigzagged when an element is exposed in a plurality of times to the electron beam turned on and off while rotating the substrate and the oblique side of the element cannot be drawn at a high accuracy. Further, this approach is disadvantageous in that it is difficult to accurately locate the fine electron beam spot in the next position and to accurately control the exposing time for the pattern width of a sub-micron order, which causes non-uniformity in exposure in one element and makes it impossible to form a clear pattern.

### SUMMARY OF THE INVENTION

In view of the foregoing observations and description, the primary object of the present invention is to provide a method of accurately drawing a phase servo pattern at an angle to the recording tracks with an electron beam.

In accordance with the present invention, there is provided a method of producing a master information carrier from an original on which a phase servo pattern is drawn by scanning the original with an electron beam, wherein the improvement comprises that
the phase servo pattern is drawn element by element by causing the electron beam having a beam diameter not larger than the minimum width of the element to scan a disc-like substrate of the original, which has been provided with a resist layer for electron beam drawing, in a diametrical direction of the disc-like substrate while rotating the substrate in one direction at a constant speed.

The expression "a diametrical direction of the disc-like substrate" should be broadly interpreted here to include, as well as a diametrical direction of the disc-like substrate in the strict sense of the word, directions where the angle α (°) between the direction and a radial direction is 0≦α<90.

When an element is intermittently drawn in a plurality of times while rotating the substrate as in the prior art described above, an oblique side of an element is zigzagged and the pattern cannot be excellent in shape. Whereas, in one embodiment of the present invention, an element of the pattern is continuously drawn by an electron beam whose beam diameter is equal to the width of the element. In this case, an oblique side of the element can be substantially linear and the pattern can be excellent in shape. In another embodiment of the present invention, an electron beam whose beam diameter is smaller than the width of the element is caused to scan at fine pitches to completely cover an element. In this case, each element is uniformly covered with the electron beam and non-uniformity in exposure in one element is not caused, whereby an excellent pattern can be obtained.

Further, since the electron gun has only to be one-dimensionally controlled, the electron gun can be accurately controlled and an excellent pattern high in reproducibility can be formed.

On the basis of the original produced in the manner described above, a master information carrier which makes it feasible to realize a high quality magnetic transfer can be obtained.

### BRIEF DESCRIPTION OF THE DRAWINGS

Figures 1A to 1C are schematic views for illustrating a method of producing an original for producing a master information carrier in accordance with an embodiment of the present invention,
Figure 2 is a schematic plan view showing a phase servo pattern,
Figure 3 is a schematic view for illustrating a first method of drawing a phase servo pattern which can be employed in a method of producing a master information carrier in accordance with the present invention,
Figure 4 is a schematic view for illustrating a second method of drawing a phase servo pattern which can be employed in a method of producing a master information carrier in accordance with the present invention,
Figure 5 is a schematic view for illustrating a third method of drawing a phase servo pattern which can be employed in a method of producing a master information carrier in accordance with the present invention,
Figures 6A to 6D are views for illustrating a method of producing a master information carrier from the original produced in accordance with the present invention, and
Figures 7A to 7C are schematic views for illustrating basic steps of magnetic transfer.

### DESCRIPTION OF THE PREFERRED EMBODIMENT

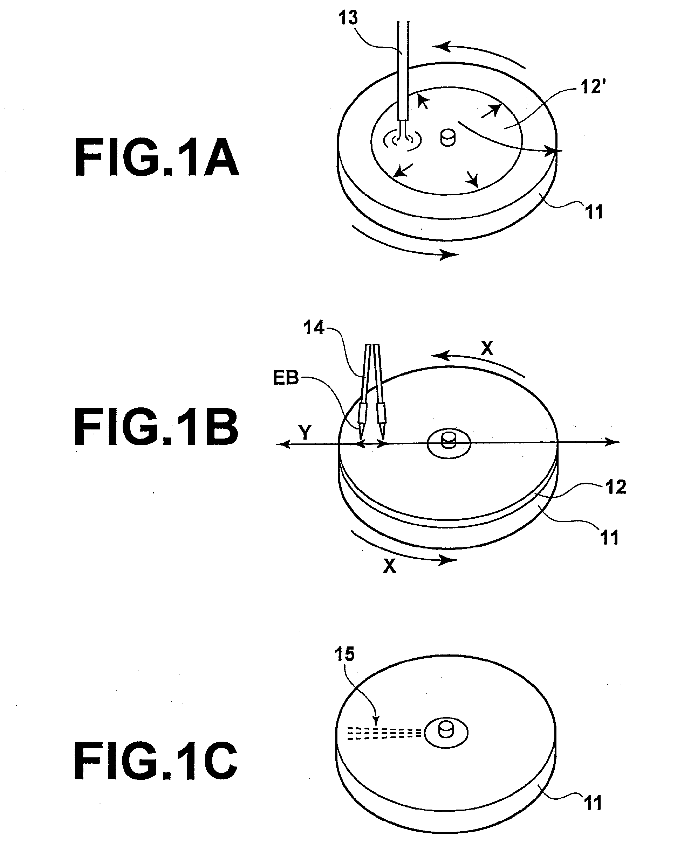

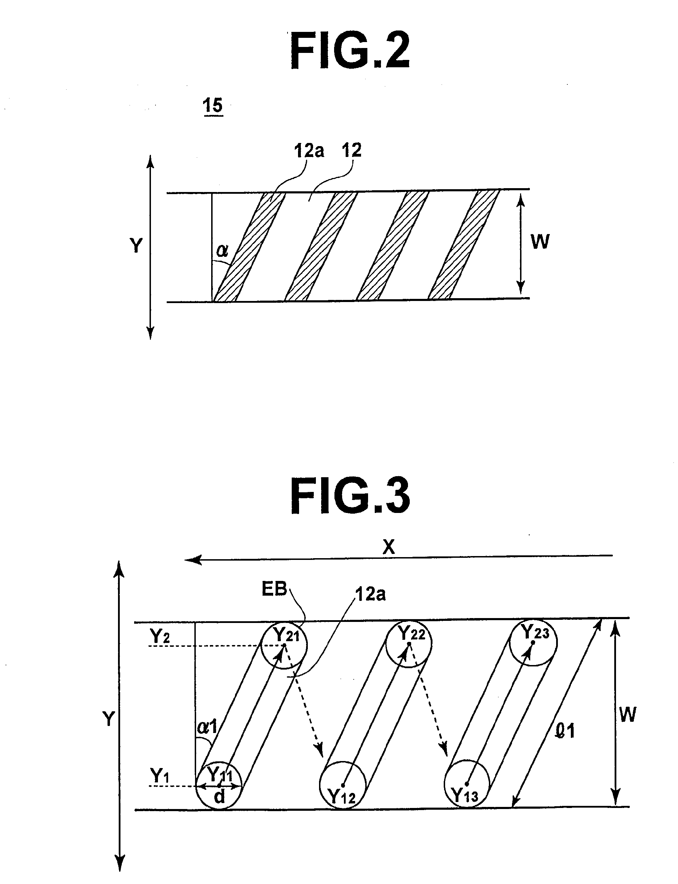

Figures 1A to 1C are views for illustrating steps of producing an original from which a master information carrier is duplicated.

As disclosed in Figure 1 A, for example, a resist solution 12', comprising a positive-type electron beam drawing resist 12 dissolved in an organic solvent, is applied to a disc-like substrate 11 of glass or quartz by spin coating from a nozzle 13 while rotating the disc-like substrate 11 in one direction and then the substrate 11 is baked.

Thereafter, as shown in Figure 1B, an electron beam EB modulated according to a servo signal is caused to finely scan the disc-like substrate 11, carrying thereon the resist 12, in a direction of arrow Y (a diametrical direction of the disc-like substrate 11) while rotating the substrate in the direction of arrow X, to expose an area corresponding to the servo signal element by element. The electron beam EB is converged to a beam diameter not larger than the minimum width of the element by a known electron gun 14.

Then, as shown in Figure 1C, the positive electron beam drawing resist 12 is developed and a substrate 11 on which the phase servo pattern 15 to be transferred is recorded is obtained. This substrate 11 is an original from which a master information carrier is duplicated.

The phase servo pattern 15 thus recorded comprises a plurality of elements 12a at an angle of α to a diametrical direction of the substrate 11 (the direction of arrow Y) . That is, the resist 12 is removed from the areas exposed to the electron beam (hatched portions in Figure 2) upon development of the resist 12 with protrusions of the resist 12 left at predetermined intervals.

Though a positive-type electron beam drawing resist is employed in this particular embodiment, a negative-type electron beam drawing resist can also be employed.

The disc-like substrate 11 may be formed, for instance, of, silicon, glass or quartz.

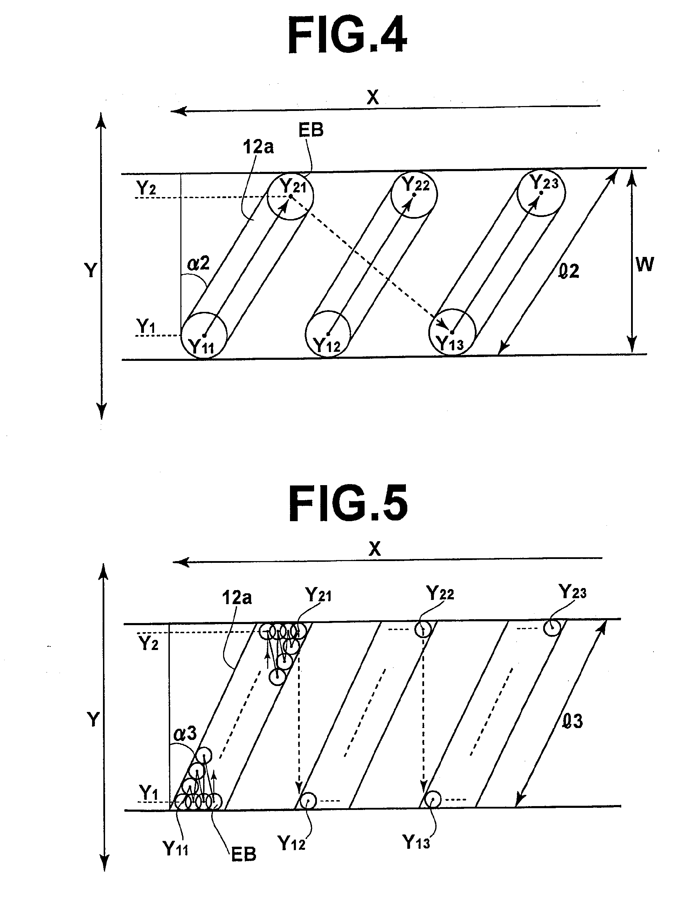

A method of drawing a phase servo pattern which can be employed in a method of producing a master information carrier in accordance with the present invention will be described with reference to Figure 3, hereinbelow. The servo pattern shown in Figure 3 comprises a plurality of elements 12a which are (1 long and are at an angle of α1 to a diametrical direction of the substrate 11 (the direction of arrow Y) . The elements 12a are drawn, for instance, by swinging an electron gun 14 emitting an electron beam EB having a beam diameter d equal to the width of the element 12a so that the electron beam EB scans positive electron beam drawing resist 12 on a disc-like substrate 11 in a diametrical direction of the substrate 11 from Y1 to Y2 while rotating the substrate 11 in the direction of arrow X. That is, the electron beam EB first obliquely scans the resist 12 from point Y11 to point Y21 to draw the leftmost element 12a. When the electron beam EB reaches the point Y21, the electron gun 14 is turned off and returned to Y1. Since the substrate 11 is rotated, the electron gun 14 is obliquely brought to point Y12. Then the electron gun 14 is turned on again and the electron beam EB is caused to scan from Y1 to Y2 (Y12 to Y22), whereby the second leftmost element 12a is drawn. In the similar manner, the other elements are drawn.

Another method of drawing a phase servo pattern which can be employed in a method of producing a master information carrier in accordance with the present invention will be described with reference to Figure 4, hereinbelow. The servo pattern shown in Figure 4 comprises a plurality of elements 12a which are ℓ2 long and are at an angle of α2 to a diametrical direction of the substrate 11 (the direction of arrow Y) . The elements 12a are drawn, for instance, by swinging an electron gun 14 emitting an electron beam EB having a beam diameter d equal to the width of the element 12a so that the electron beam EB scans positive electron beam drawing resist 12 on a disc-like substrate 11 in a diametrical direction of the substrate 11 from Y1 to Y2 while rotating the substrate 11 in the direction of arrow X. That is, the electron beam EB first obliquely scans the resist 12 from point Y11 to point Y21 to draw the leftmost element 12a. When the electron beam EB reaches the point Y21, the electron gun 14 is turned off and returned to Y1. In this particular example, the electron gun 14 cannot be returned to the starting point Y12 of the second leftmost element 12a due to the swinging speed of the electron gun 14 with respect to the rotating speed of the substrate 11. In such a case, elements which cannot be drawn from their starting points are not drawn in the first rotation of the substrate 11, and are drawn in the second or following other rotation of the substrate 11. Then elements which can be drawn from their starting points are only drawn in the first rotation of the substrate 11. That is, the substrate 11 is kept rotated until all the elements in one recording track are drawn.

The methods of drawing a phase servo pattern described above are advantageous in that the phase servo pattern can be drawn easily in a short time since the pattern is drawn by an electron beam whose beam diameter is equal to the width of the element but are disadvantageous in that the edges are rounded since it is impossible to expose the resist up to just edges of the pattern.

Still another method of drawing a phase servo pattern which can be employed in a method of producing a master information carrier in accordance with the present invention will be described with reference to Figure 5, hereinbelow. The servo pattern shown in Figure 5 comprises a plurality of elements 12a which are ℓ3 long and are at an angle of α3 to a diametrical direction of the substrate 11 (the direction of arrow Y). The elements 12a are drawn, for instance, by repeatedly swinging an electron gun 14 emitting an electron beam EB having a beam diameter sufficiently smaller than the width of the element 12a while moving the gun 14 from Y1 to Y2 and rotating the substrate 11 in the direction of arrow X so that the electron beam EB scans positive electron beam drawing resist 12 on a disc-like substrate 11 in a diametrical direction of the substrate 11 by an increasing distance as the electron gun 14 moves away from Y1 to a predetermined distance therefrom, by a constant distance as the electron gun 14 moves from the predetermined distance from Y1 to a predetermined distance from Y2 and by a decreasing distance as the electron gun 14 moves from the predetermined distance from Y2 to Y2. When the electron beam EB reaches the point Y21, the electron gun 14 is turned off and returned to Y1. Since the substrate 11 is rotated, the electron gun 14 is obliquely brought to point Y12. Then the electron gun 14 is turned on again and the electron beam EB is caused to scan from Y1 to Y2 (Y12 to Y22), whereby the second leftmost element 12a is drawn. In the similar manner, the other elements are drawn.

By the use of an electron beam whose beam diameter is sufficiently smaller than the width of the element, non-uniformity in exposure in one element can be prevented and the pattern can be accurately reproduced.

Also in the method where the electron gun whose beam diameter is sufficiently smaller than the width of the element is repeatedly swung in a diametrical direction while moving it from Y1 to Y2 and rotating the substrate 11, elements which cannot be drawn from their starting points are not drawn in the first rotation of the substrate 11, and are drawn in the second or following other rotation of the substrate 11.

It is preferred that the electron beam output and the beam diameter be adjusted taking into account the shape of the phase servo pattern and the sensitivity of the electron beam drawing resist.

The phase servo pattern need not be limited to those accommodated within one track width but even those extending from one track to other one or more tracks may be drawn in a similar manner.

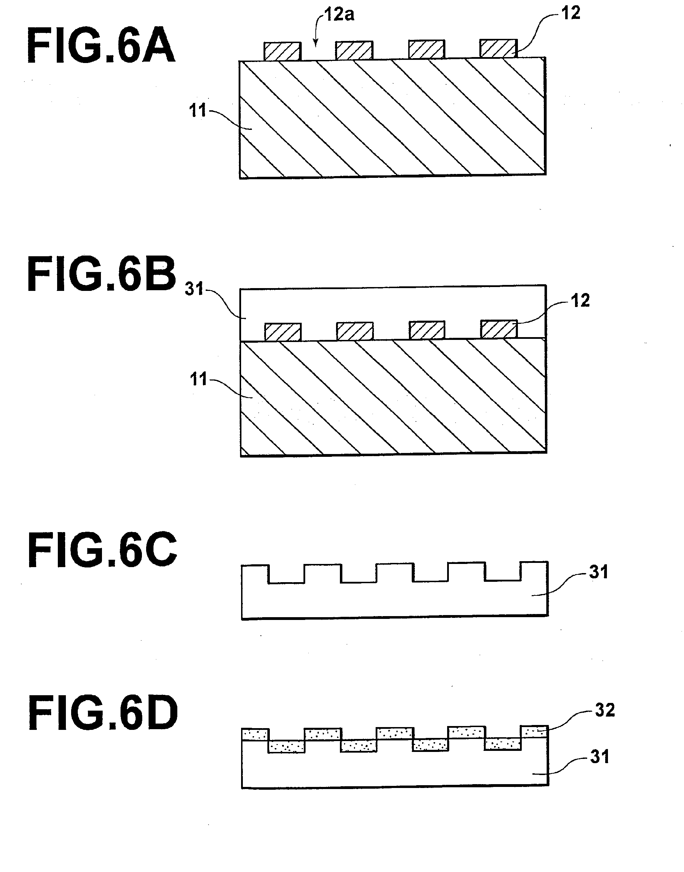

Production of a master information carrier by the use of an original produced in the manner described above will be described with reference to Figures 6A to 6D, hereinbelow.

As shown in Figure 6A, a phase servo pattern is drawn on a positive-type electron beam drawing resist 12 by projecting an electron beam EB in the manner described above and the resist 12 in the area 12a exposed to the electron beam EB is removed by developing the resist, whereby an original carrying thereon a servo pattern of the resist 12 is obtained.

Then a thin conductive layer is formed on the surface of the original and electroforming is applied to the thin conductive layer, whereby a metal disc 31 having a positive irregularity pattern following the original is obtained as shown in Figure 6B.

Thereafter, the metal disc 31 in a predetermined thickness is peeled off the original as shown in Figure 6C.

After the back side of the metal disc 31 is polished, the metal disc 31 may be used as a master information carrier, or the metal disc 31 provided with a soft magnetic layer 32 on the surface of irregularity pattern as shown in Figure 6D may be used as a master information carrier.

Otherwise, the original may be plated to form a second original and the second original may be plated to form a metal disc having a negative irregularity pattern. Further, a third original may be formed by plating the second original or pressing a resin syrup against the surface of the second original and curing the resin syrup, and a metal disc having a positive irregularity pattern may be formed by plating the third original.

Whereas, after the resist 12 in the exposed area is removed by development, the disc-like substrate 11 selectively covered with the resist 12 left thereon may be etched and an original may be obtained by removing the resist 12 after etching. Thereafter, a metal disc 31 can be obtained from the original in the same manner as described above.

The metal disc 31 may be formed of Ni or Ni alloys. The metal disc 31 may be formed by plating such as various metal film forming techniques including electroless plating, electroforming, sputtering, and ion plating. The depth of the irregularity pattern (the height of the protrusions) of the metal disc 31 is preferably 80nm to 800nm, and more preferably 150nm to 600nm.

The soft magnetic layer 32 is formed by forming film of a magnetic material by, for instance, by vacuum film forming techniques such as sputtering or ion plating or plating. As the magnetic material, Co, Co alloys (e.g., CoNi, CoNiZr, or CoNbTaZr), Fe, Fe alloys (e.g., FeCo, FeCoNi, FeNiMo, FeAlSi, FeAl, or FeTaN), Ni or Ni alloys (e.g., NiFe) can be employed. FeCo and FeCoNi are especially preferred. The thickness of the soft magnetic layer 32 is preferably 50nm to 500nm, and more preferably 100nm to 400nm.

A master information carrier may be formed by forming a resin substrate by the use of the original produced in the manner described above and providing a magnetic layer on the surface of the resin substrate. As the material of the resin substrate, acrylic resins such as polycarbonate or polymethyl methacrylate, vinyl chloride resins such as polyvinyl chloride, or vinyl chloride copolymer, epoxy resins, amorphous polyolefins, polyesters or the like may be used. Among those. polycarbonate is preferred in view of the humidity resistance, dimensional stability, cost and/or the like. Flash on the product should be removed by varnishing or polishing. Otherwise, ultraviolet curing resin or electron beam curing resin may be coated on the original, for instance, by spin coating or bar coating. The height of the protrusion on the resin substrate is preferably 50 to 1000nm and more preferably 100 to 500nm. A soft magnetic layer is provided over the fine pattern on the surface of the resin substrate, thereby obtaining a master information carrier.

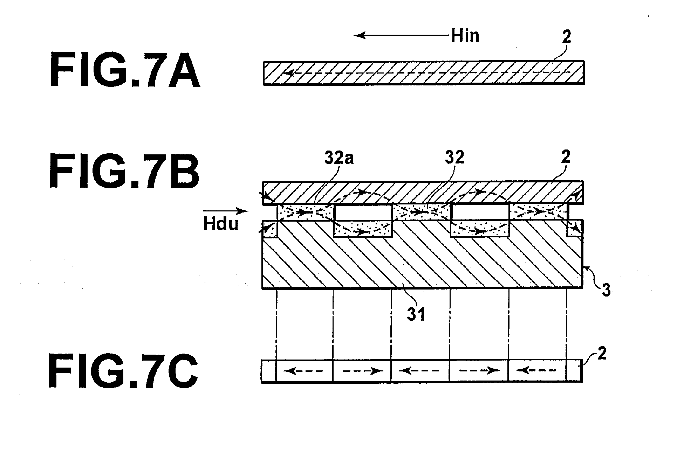

Basic steps of magnetic transfer to an in-plane magnetic recording medium (slave medium) will be described with reference to Figures 7A to 7C, hereinbelow.

An initial DC magnetic field Hin is first applied to the slave medium 2 in one direction parallel to the recording tracks thereof, thereby magnetizing the magnetic layer of the slave medium 2 in an initial DC magnetization (DC erasure) as shown in Figure 7A. Thereafter, the protrusions 32a of the substrate 31 of the master information carrier 3 covered with the soft magnetic layer 32 is brought into close contact with the magnetic layer of the slave medium 2. In this state, a transfer magnetic field Hdu is applied in the direction opposite to the initial DC magnetic field Hin as shown in Figure 7B, thereby magnetically transferring the information on the master information carrier 3 to the slave medium 2. That is, the transfer magnetic field Hdu is absorbed in the soft magnetic layer 32 on the protruding portion 32 on the master information carrier 3 in close contact with the slave medium 2, and the initial magnetization of the part of the slave medium 2 in contact with the protruding portion of the master information carrier 3 is not reversed but the initial magnetization of the other part of the slave medium 2 is reversed, whereby a magnetization pattern corresponding to the irregularity pattern on the master information carrier 3 is recorded on (or transferred to) the tracks of the slave medium 2.

The master information carrier 3 is like a disc, and a fine irregularity pattern of the soft magnetic layer 32 representing a servo signal is formed on one side of the master information carrier 3. The master information carrier 3 is brought into close contact with the slave medium 2 with the other side held by a holder (not shown). The information represented by the irregularity patterns on a pair of master information carriers 3 may be transferred to opposite sides of the slave medium 2 either simultaneously or in sequence.

The intensities of the initial magnetic field and the transfer magnetic field should be determined taking into account the coercive force of the slave medium 2, the specific permeabilities of the magnetic layers of the master information carrier 3 and the slave medium 2.

In the case of perpendicular recording, a master information carrier 3 substantially the same as that employed in in-plane recording is employed. In the case of perpendicular recording, the magnetic layer of the slave medium 2 is magnetized in advance in a perpendicular direction and a transfer magnetic field is applied to the slave medium 2 and the master information carrier 3 in close contact with each other, whereby the initial magnetization of the part of the slave medium 2 in contact with the protruding portion 32a of the master information carrier 3 is reversed and the initial magnetization of the other part of the slave medium 2 is not reversed, and the magnetic layer of the slave medium 2 is magnetized in a pattern corresponding to the irregularity pattern on the master information carrier 3.

A magnetic recording disc such as a hard disc or a high-density flexible disc provided with a magnetic layer on one side or each side thereof is generally employed as the slave medium 2. The magnetic layer thereof is generally of a coated magnetic material or a metal film. In the case of a slave medium having a magnetic layer of metal film, the material of the magnetic layer may be Co, Co alloy (e.g., CoPtCr, CoCr, CoPtCrTa, CoPtCrNbTa, CoCrB, CoNi, Co/Pd), Fe or Fe alloy (e.g., FeCo, FePt, FeCoNi) . These materials are preferred in view of obtaining clearer magnetic transfer since the magnetic layer of these materials is higher in magnetic flux density. It is further preferred that the magnetic layer of the slave medium 2 be provided with a non-magnetic primer layer on the base sheet side thereof in order to give the magnetic layer a necessary magnetic anisotropy. The primer layer should match to the magnetic layer in crystallographic structure and lattice constant. For this purpose, Cr, CrTi, CoCr, CrTa, CrMo, NiAl, Ru or the like may be employed as the non-magnetic primer layer.

The magnetic field generation means for applying the initial magnetic field and the transfer magnetic field comprises a pair of ring type electromagnets each disposed on one side of the slave medium 2 and the master information carrier 3 in a close contact with each other. Each of the electromagnets comprises a core having a gap extending in a radial direction of the slave medium 2 and a winding wound around the core. In the case of the in-plane recording, the ring type electromagnets on opposite sides of the slave medium 2 and the master information carrier 3 in a close contact with each other applies magnetic fields in the same direction in parallel to the tracks. The magnetic field generation means applies a magnetic field to the slave medium 2 and the master information carrier 3 while rotating a holder which holds the slave medium 2 and the master information carrier 3 in a close contact with each other. Instead of rotating the holder, the magnetic field generation means may be rotated. A ring type electromagnet may be disposed on one side of the slave medium 2 and the master information carrier 3 or on each side of the same. A permanent magnet may be employed in place of the electromagnets.

In the case of the perpendicular recording, a pair of electromagnets or a permanent magnets different in polarity are disposed on opposite sides of the holder and a magnetic field is generated in perpendicular to the tracks. When the magnetic field generation means is of a type which applies a magnetic field only a part of the slave medium 2 and the master information carrier 3, the holder and the magnetic field are moved with respect to each other so that a magnetic field is applied to the slave medium 2 and the master information carrier 3 over the entire area thereof.

## Claims

1. A method of producing a master information carrier from an original on which a phase servo pattern is drawn by scanning the original with an electron beam, wherein the improvement comprises that
the phase servo pattern is drawn element by element by causing the electron beam having a beam diameter not larger than the minimum width of the element to scan a disc-like substrate of the original, which has been provided with a resist layer for electron beam drawing, in a diametrical direction of the disc-like substrate while rotating the substrate in one direction at a constant speed.

2. A method as defined in Claim 1 in which an element of the pattern is continuously drawn by an electron beam whose beam diameter is equal to the width of the element.

3. A method as defined in Claim 1 in which an electron beam whose beam diameter is smaller than the width of the element is caused to scan at fine pitches to completely cover an element of the pattern.
